# DEMANDE DE BREVET EUROPEEN

(11) **EP 1 595 671 A1**
(43) Date de publication de la demande: **16.11.2005**
(21) Numéro de dépôt: 04011065.2
(22) Date de dépôt: 10.05.2004
(51) Int. Cl.: B29B 17/00, B29B 7/16, B29B 7/44, B29B 7/26, B01F 15/00, B01F 7/04, B01F 7/18

(54) **Appareil de traitement de matières plastiques dans un but de recyclage et procédé utilisant cet appareil**

(71) Demandeur: New Generation Holding, New York, NY (US)
(72) Inventeur: Mot, Jacques, 1223 Cologny (CH)
(74) Mandataire: Kügele, Bernhard

(57) **Abrégé**

La présente invention se rapporte à un dispositif permettant le traitement de matières plastiques dans un but de recyclage, ledit appareil comprenant des lames ovales orientables (6) permettant de meilleures caractéristiques de mélange, dont le temps de mélange, et qui peut en outre être adapté et utilisé pour différents types de mélanges par une simple opération, et à un procédé de traitement de matières plastiques utilisant ce dispositif.

## Description

La présente invention se rapporte à un dispositif permettant le traitement de matières plastiques dans un but de recyclage, et à un procédé de traitement de matières plastiques utilisant ce dispositif.

### ART ANTERIEUR

Les matières plastiques, particulièrement les matières thermoplastiques, de par leur quantité d'utilisation, leurs propriétés et leurs structures sont d'excellents candidats aux différents procédés de recyclage. En effet, des matériaux tels que le PET, le PVC, le PP, le PS et autres similaires comptent parmi les matériaux les plus recyclés. Plusieurs procédés ont été connus dans un but de recyclage de matières plastiques impliquant un chauffage de matériaux plastiques, par une source de chaleur externe, permettant de fondre ces matériaux pour pouvoir en obtenir un nouveau matériau homogène ou du même genre. Néanmoins, l'apport d'énergie thermique externe est coûteux et désavantageux du point de vue économique.

Le document WO 92/18310 décrit un appareil et un procédé utilisant cet appareil pour le traitement de matières plastiques différentes mélangées dans lequel on soumet les matières plastiques à un brassage et une agitation par l'action d'un rotor muni de lames fixes tournant selon l'axe du rotor à vitesse élevée et chauffant ainsi les matières plastiques par frottement jusqu'à obtenir une pâte homogène constituée par les différentes matières plastiques initialement hétérogènes. Ce dispositif a le désavantage que son fonctionnement est invariable et ne peut pas être adapté aux matériaux traités pour optimiser le processus en vue de la qualité variable des déchets.

### RESUME DE L'INVENTION

Il est le but de la présente invention de proposer un appareil de traitement qui, par une simple opération, peut être adapté à un nombre de type de mélange de déchets en matières plastiques afin d'optimiser son homogénéisation au niveau de la qualité du mélange ainsi que pour la durée du traitement.

Un objet de la présente invention est de fournir un dispositif muni d'un arbre rotatif pour faire fusionner différentes matières plastiques, dont les lames, étant de longueur et de forme conventionnelles, peuvent être déplacées et orientées de manière à optimiser le mélange en fonction des propriétés des matériaux traités.

Un autre objet de la présente invention est de proposer une configuration de support des lames de longueur et de forme conventionnelle pouvant être utilisée dans le but de la présente invention.

Un autre objet de la présente invention est de fournir une installation permettant une meilleure conservation lors de la manipulation du matériau traité par ledit dispositif.

Un autre objet de la présente invention est de fournir un procédé de recyclage de matières plastiques à moindre coût et à moindre effort.

La présente invention permet un excellent mélange de différents matériaux jusqu'à l'obtention d'une nouvelle matière homogène réutilisable. Afin d'obtenir ces buts, le dispositif comprend :
une chambre de mélange ;
une entrée et une sortie de matière ;
une vis sans fin d'évacuation.
au moins un rotor dans la chambre de mélange ayant des lames,
caractérisé par le fait que lesdites lames sont supportées sur ledit rotor de façon orientable autour des axes perpendiculaire à l'axe du rotor.

Avantageusement, les lames orientables peuvent être orientées en au moins cinq angles différents ou plus selon le besoin. L'homme du métier appréciera que l'orientation favorise nettement le mélange et améliore la diffusion des différents flux de matière créés par le tranchant des lames.

D'autres buts et avantages de l'invention seront mis en évidence dans la description détaillée qui suit. La description détaillée et les modes de réalisation spécifiques décrits ne sont fournis qu'à titre d'exemples et diverses additions et modifications seront évidentes pour l'homme du métier après lecture de la description détaillée, sans sortir de l'étendue de l'invention.

### BREVE DESCRIPTION DES DESSINS

La figure 1 montre un appareil de mélange de matières plastiques selon l'art antérieur.

La figure 2 montre une coupe du rotor parallèle à l'axe des lames selon un mode de réalisation de la présente invention.

La figure 3 montre une coupe du rotor perpendiculaire à l'axe des lames selon un mode de réalisation de la présente invention.

La Figure 4 montre une coupe verticale d'une lame et de son support selon un mode de réalisation de la présente invention.

La Figure 5 montre une coupe transversale d'un support de lame reçu dans le rotor selon un mode de réalisation de la présente invention.

La figure 6 est un schéma du procédé de mélange selon l'art antérieur.

La figure 7 est un schéma de procédé de mélange selon un mode de réalisation de la présente invention.

La figure 8 est un schéma représentant un dispositif selon un second mode de réalisation de la présente invention.

La figure 9 est un schéma représentant un dispositif selon un troisième mode de réalisation de la présente invention.

La figure 10 est un schéma représentant un dispositif selon un quatrième mode de réalisation de la présente invention.

La figure 11 est un schéma représentant un dispositif selon un cinquième mode de réalisation de la présente invention.

### DESCRIPTION DETAILLEE DE L'INVENTION

### Mode de réalisation 1

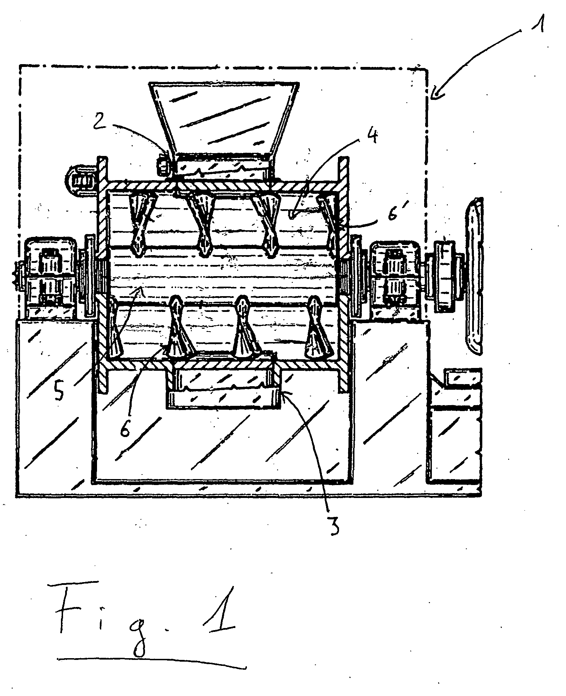

La Figure 1 montre un appareil de traitement selon l'art antérieur comprenant un dispositif de mélange de matières plastiques 1 comprenant entre autres une entrée 2, une sortie 3, une chambre de mélange 4, et un rotor 5, sur lequel sont disposées des lames 6 en alternance d'un côté et de l'autre à 180°. Un tel dispositif fonctionne de manière discontinue comme expliqué dans ce qui suit.

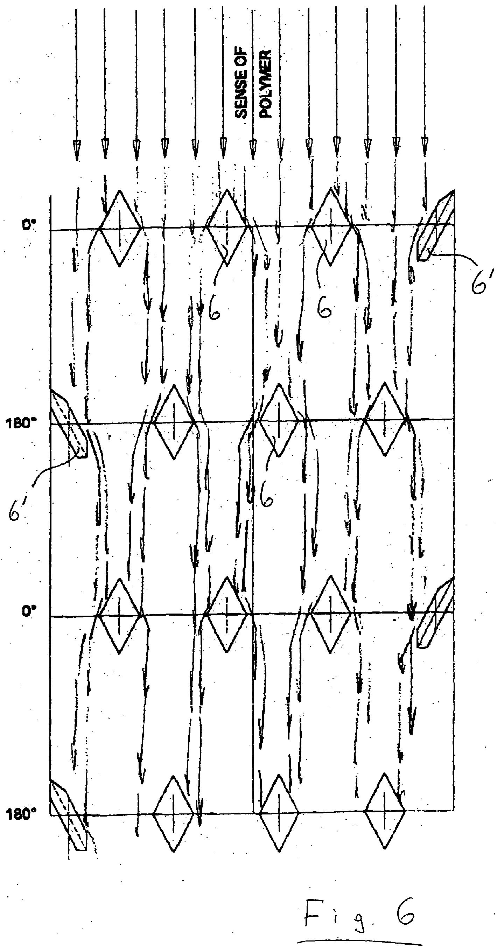

Une quantité de matière est introduite dans la chambre de mélange 4 par l'entrée 2, la chambre est ensuite fermée hermétiquement et le rotor 5 commence à tourner à haute vitesse transmettant ainsi une énergie mécanique aux matériaux devant être mélangés. Après un certain temps selon les conditions de mélange telles que la vitesse de rotation du rotor 5, le type de matériaux, la décélération avant ouverture des portes 2 et 3, et autres similaires, les matériaux prennent la forme d'une pâte plus ou moins homogène et sont ensuite évacués au travers de la sortie 3. Le processus de mélange des matériaux pour ce type d'appareil de l'art antérieur est illustré dans la Figure 6, où on peut voir que chaque lame coupe le flux de matériaux arrivant en deux parties égales et la lame prochaine coupe chaque partie encore en deux parties égales, sans vraiment mélanger les parties coupées.

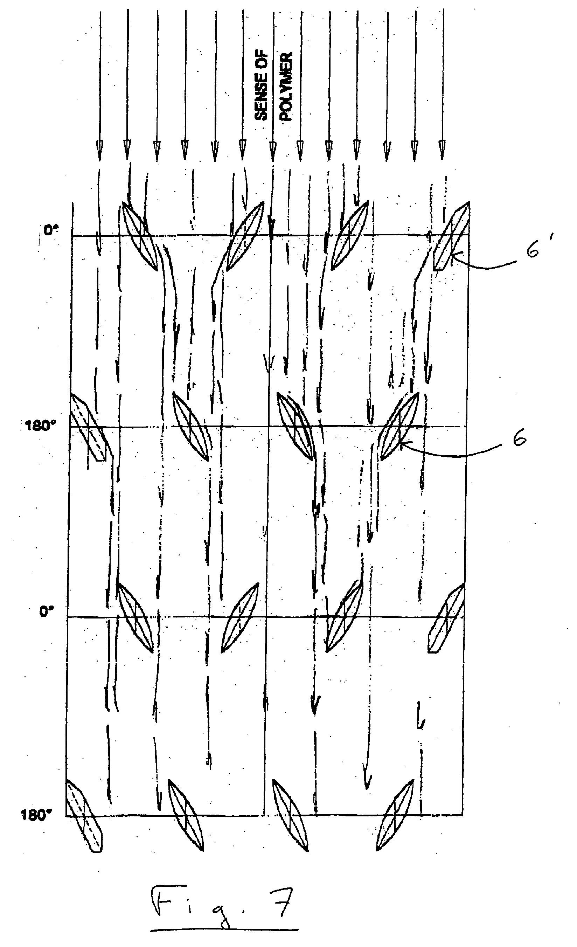

La présente invention utilise un tel type d'appareil, et prévoit le positionnement des lames ovales non coupantes 6 de façon orientable autour des axes perpendiculaires à l'axe du rotor. Dans le processus de brassage des déchets mélangés continu les lames orientées 6 tranchent en continu ledit mélange de matières plastiques et diffusent les différentes portions de matériaux tranchées les unes vers les autres de manière non aléatoire, plus précisément, la première rangée de lame sépare le flux de matière en un nombre de parties égal au nombre d'intervalle entre les lames 6, puis les zones de flux non séparées rencontrent une seconde rangée de lames 6 les séparant, et ainsi de suite, pour permettre un mélange intime et ainsi d'améliorer le processus de mélange comme représenté dans la figure 7.

Quand le matériau est homogénéisé, il est évacué de la chambre de mélange 4 par la sortie 3, et est envoyé par une vis 8 sans fin vers un filtre puis est dégazé pour enlever tous gaz piégés dans la masse qui altèrent les propriétés du matériau. Le matériau est ensuite envoyé par une autre vis sans fin vers un procédé d'extrusion en fil suivi d'une granulation pour une utilisation ultérieure.

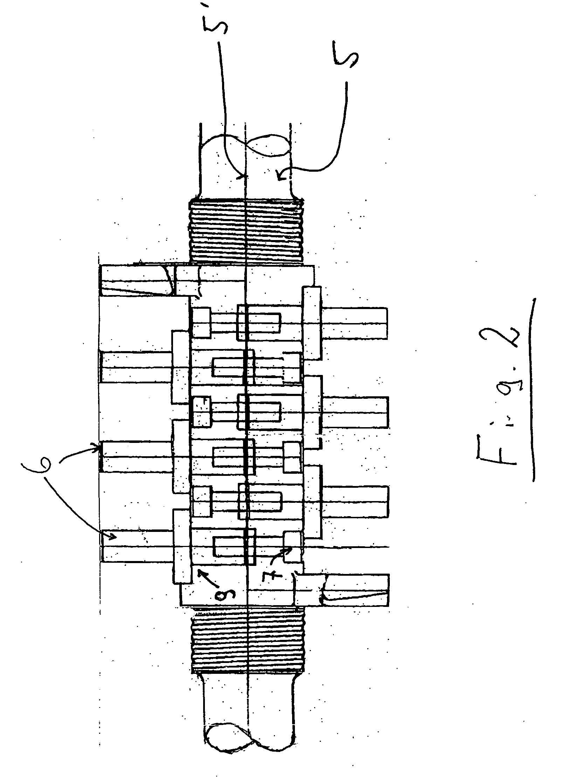

Sur la figure 2, on voit des lames 6 placées sur un rotor 5 par l'intermédiaire de leurs supports 9 respectifs mis en prise de manière opposée avec des vis 7. Ces lames 6 sont alternées d'un côté et d'un autre à 180° afin de donner un rotor muni de lames alternées dans la direction opposée. Le rotor peut tourner autour de son axe de symétrie 5' à une vitesse allant de 5000 à 6000 rpm afin de mélanger et de faire fusionner les différents matériaux présents dans la chambre fermée du dispositif.

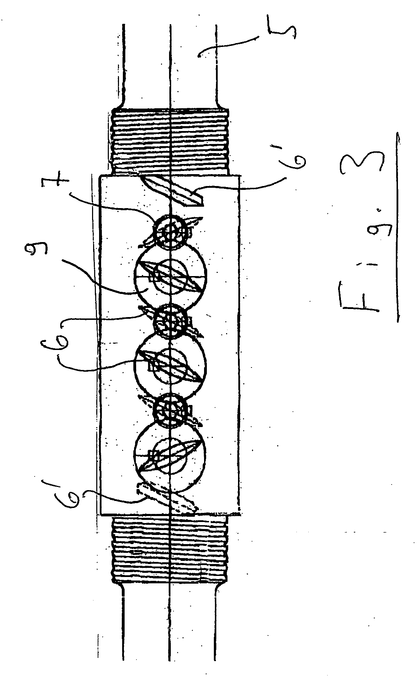

La Figure 3 montre une possible orientation de lames 6 choisie dans le but d'optimiser l'efficacité du dispositif. En effet, en orientant le tranchant des lames 6 de cette façon, on provoque alors un effet de tourbillons permettant ainsi une division et un croisement des flux plus important, favorisant ainsi le mélange des flux. Il est a remarqué que les lames extérieures 6', c'est-à-dire les deux lames aux extrémités du rotor sont orientées de manière à ramener la matière vers le centre de la chambre de mélange 4 afin de ne pas avoir de zone morte dans la chambre de mélange 4.

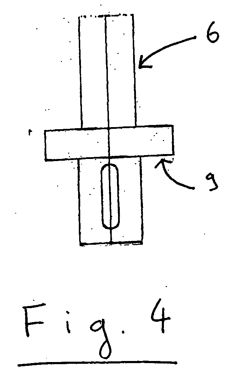

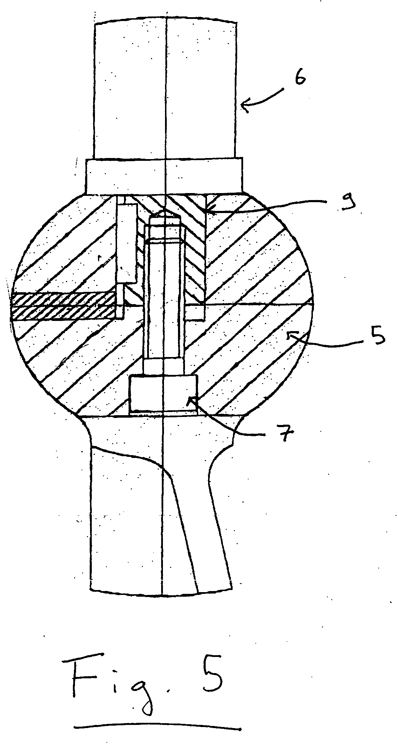

Les Figure 4 et 5, montrent un support 9 des lames orientables 6 qui est fixé sur le rotor par mise en prise avec une vis 7, qui permet une orientation arbitraire des lames sur une gamme d'angle de 0 à 180°, ou un positionnement dans l'une quelconque des orientations prédéterminées.

### Mode de réalisation 2

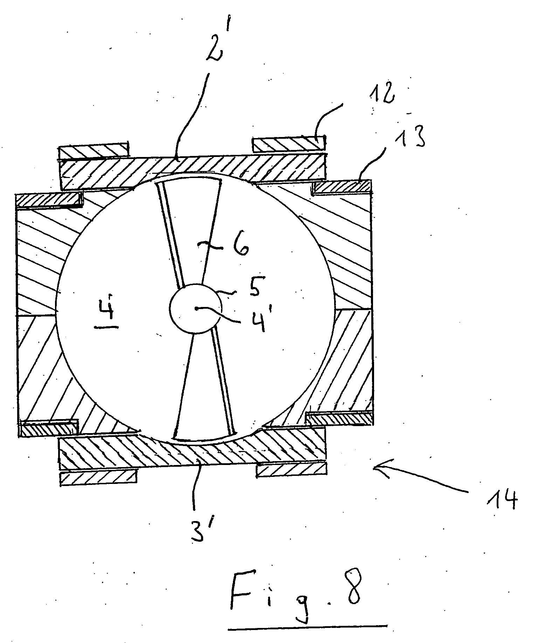

Dans la Figure 8 on voit un dispositif de mélange de polymère correspondant au mode de réalisation 1 dans lequel on a substitué les portes d'entrée 2 et de sortie 3, qui, sans être illustrées en détail dans la Figure 1, sont réalisées dans l'art antérieur typiquement en portes pivotantes, par des portes coulissantes 2' et 3', respectivement, afin d'obtenir une meilleure étanchéité de la chambre de mélange.

En effet l'utilisation de portes coulissantes 2' et 3' empêche le dépôt de matière sur les surfaces de contact entre la porte et la paroi de la chambre de mélange 4 permettant ainsi une meilleure étanchéité à long terme.

La porte coulissante supérieure consiste en une plaque 2' qui glisse entre des rails 12 et 13 et comporte, à sa surface tournée vers l'intérieur, une surface concave ayant le même rayon de courbure que la chambre de mélange 4.

La porte inférieure comprend une plaque 3' qui glisse entre des rails 14 et qui comporte à sa surface tournée vers l'intérieur, une surface concave similaire à celle de la plaque 2'.

### Mode de réalisation 3

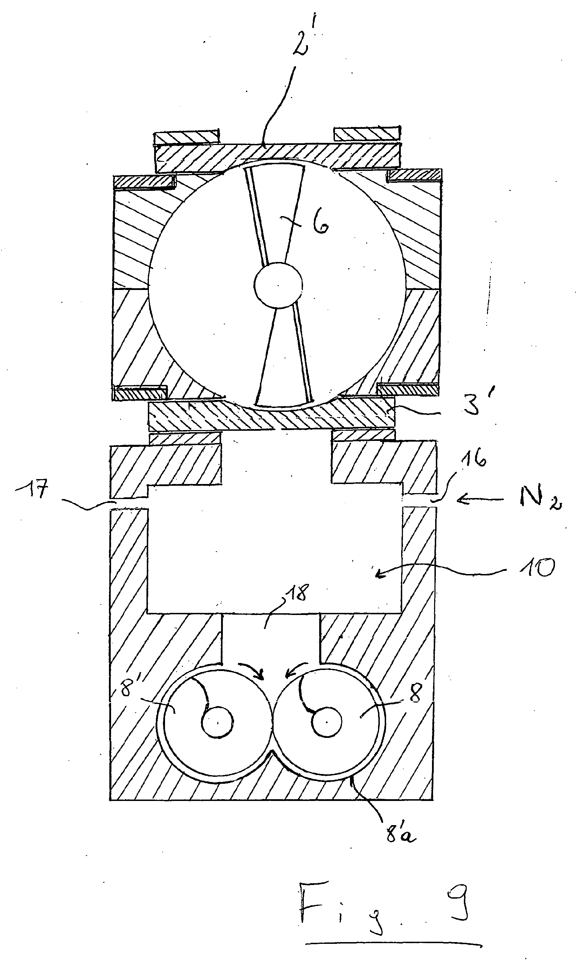

Dans la Figure 9 on voit un dispositif de mélange de polymère tel que représenté par le mode de réalisation 2 dans lequel le matériau évacué de la chambre de mélange 4 est pris en charge par une double vis sans fin 8 et 8', les deux tournant en contresens dans un évidement 8'a, après la sortie 3, permettant une meilleure appréhension du matériau fusionné. Ensuite, le matériau est soumis à un processus de dégazage partiel.

Dans la Figure 9 a été représenté également une chambre 10 de ventilation selon la mode de réalisation 4 étant entendu que la présence d'une telle chambre est optionnelle.

### Mode de réalisation 4

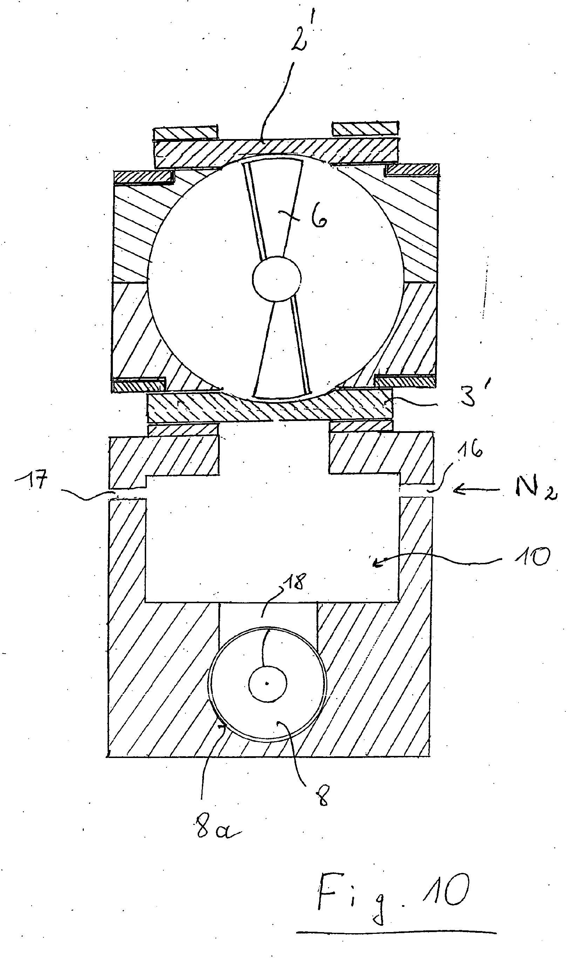

Dans la Figure 10 on voit un dispositif de mélange de polymère tel que représenté dans la Figure 8. Dans cette figure, on voit une chambre à gaz inerte 10 entre la sortie 3 et la vis 8, qui permet une meilleure conservation du matériau.

En effet cette chambre à gaz inerte permet d'éviter un contact entre le matériau et un oxydant tel que l'air par exemple. Le gaz inerte peut être de l'azote, de l'argon, ou n'importe quel gaz inerte conventionnel.

La partie supérieure de l'appareil de ce quatrième mode de réalisation de l'invention correspond à l'appareil de la Figure 8.

On distingue en dessous de la porte de sortie 3' une chambre de transfert 10, qui est ventilée avec un gaz inerte, tel que N₂, et plus bas encore une vis sans fin 8 qui est reçue de façon rotative dans un alésage 8a.

La chambre 10 comporte deux ouverture 16 et 17 dont une est utilisée pour amener le gaz inerte et l'autre pour évacuer le surplus en gaz.

En dessous de la chambre 10 un évidement 18 sert de canal de transfert entre la chambre 10 et l'alésage 8a.

Le matériau traité est évacué par la vis sans fin 8 en une direction perpendiculaire au plan de dessin pour arriver à un poste d'extrusion.

### Mode de réalisation 5

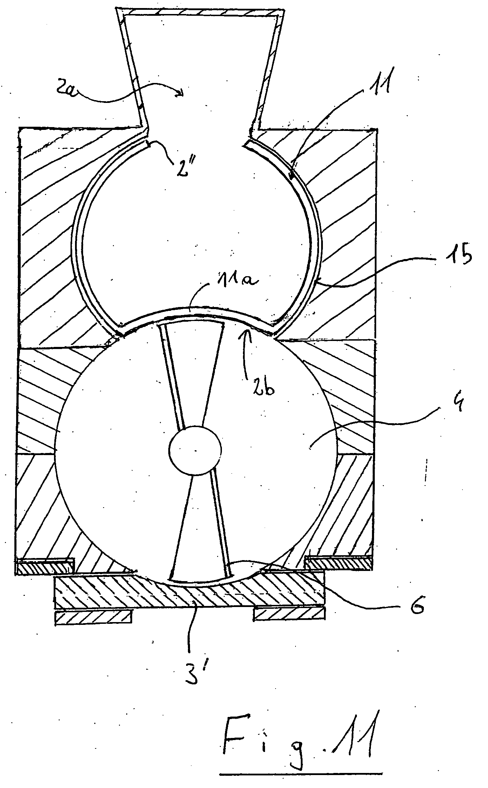

Dans la Figure 11 on voit un dispositif de mélange de polymère tel que représenté dans la Figure 8. Ce dispositif comporte en outre un cylindre 11 reçu dans une deuxième chambre 15 placée juste au dessus de la chambre de mélange 4 et comprenant une ouverture 2b partagée avec la chambre de mélange. Ce cylindre est muni d'une ouverture d'entrée 2'' pour le matériau à mélanger et est capable de tourner autour un axe de rotation parallèle à celui du rotor, permettant ainsi à son ouverture de faire tour à tour face à l'entrée 2a de manière à y introduire les matériaux et à l'ouverture 2b afin d'y déverser les matériaux précédemment introduits.

De cette façon, la quantité des différents matériaux devant être introduits dans la chambre de mélange peut être prédosée.

Le cylindre 11 comporte sur une partie de sa circonférence une partie 11a, dont la courbure se distingue du reste du cylindre 11 pour suivre la courbure de la chambre de mélange 4.

De cette façon, durant la phase de brassage du rotor, le contour de la chambre de mélange est exactement circulaire, alors que dans la phase de chargement, le cylindre est retourné de 180° et des parties du cylindre rentrent dans la chambre 4, ce qui est possible lorsque l'on s'est assuré que les lames 6 se trouvent dans une orientation plus ou moins horizontale.

## Revendications

1. Dispositif de mélange de matières plastiques comprenant :
une chambre de mélange (4) ;
une entrée (2) et une sortie (3) de matière ;
une vis sans fin d'évacuation (8) ;
au moins un rotor (5) dans la chambre de mélange (4) ayant des lames (6),
**caractérisé par le fait que** lesdites lames (6) sont supportées sur ledit rotor (5) de façon orientable autour des axes perpendiculaires à l'axe du rotor (5').

2. Dispositif de mélange de matières plastiques selon la revendication 1, dans lequel lesdites lames orientables (6) ont préférablement un profil ovale et sont en prise avec une vis (7) sur ledit rotor (5) et alignées d'une part et d'autre de façon alternée sur ledit rotor (5), s'étendant en direction radiale par rapport à l'axe (5') dudit rotor (5).

3. Dispositif de mélange de matières plastiques selon la revendication 2, dans lequel les lames aux extrémités (6') dudit rotor (5) sont fixes et ramènent la matière vers l'intérieur de ladite chambre de mélange (4)

4. Dispositif de mélange de matières plastiques selon la revendication 1 ou 2, dans lequel une entrée (2') et une sortie (3') ont chacune une porte coulissante glissant entre des rails (12 ; 13 ; 14) et ayant une forme concave sur la surface tournée vers l'intérieur ayant sensiblement un même rayon de courbure que ladite chambre de mélange (4).

5. Dispositif de mélange de matières plastiques selon l'une quelconque des revendications 1 à 3, dans lequel une chambre à gaz inerte (10) ventilée avec un gaz inerte est située juste au dessous de ladite sortie (3) et au dessus de ladite vis sans fin (8).

6. Dispositif de mélange de matières plastiques selon la revendication 5, **caractérisé en ce que** ladite chambre à gaz inerte (10) comprend au moins deux ouvertures (16 ; 17) pour une circulation de gaz.

7. Dispositif de mélange de matières plastique selon la revendication 5 ou 6, dans lequel ledit gaz inerte peut être de l'azote, de l'argon ou l'un quelconque gaz inerte.

8. Dispositif de mélange de matières plastiques selon l'une quelconque des revendications précédentes, dans lequel l'évacuation de la matière se fait par une double vis (8) et (8') tournant en contresens, situés dans un alésage (8a').

9. Dispositif de mélange de matières plastiques selon l'une quelconque des revendications précédentes **caractérisé en ce qu'**une deuxième chambre (15) située au-dessus de ladite chambre de mélange (4), et partageant une ouverture (2b) avec ladite chambre de mélange, comprend un moyen de préchargement de matières plastiques en granulés.

10. Dispositif de mélange de matières plastiques selon la revendication 9, dans lequel ladite deuxième chambre (15) comprend un cylindre (11), comprenant une ouverture (2'') ainsi qu'une partie concave (11a) ayant un même rayon de courbure que ladite chambre de mélange (4), ledit cylindre étant susceptible d'effectuer une rotation d'au moins 180°, ledit cylindre (11) étant situé au-dessus de ladite chambre de mélange (4), de sorte que lors de la rotation dudit cylindre (11) son ouverture (2'') est amenée en face de ladite ouverture de chargement (2b) de ladite chambre de mélange.

11. Procédé de mélange de matières plastiques, utilisant un dispositif selon l'une quelconque des revendications précédentes.

12. Procédé selon la revendication 11, comprenant les étapes suivantes :
- introduire les matériaux en forme de granulés dans ladite chambre de mélange (4) par une entrée (2 ; 2') ;
- faire tourner ledit rotor (5) permettant ainsi le mélange des granulés jusqu'à la fusion desdits granulés par la chaleur de friction entre lesdits granulés ;
- évacuer le mélange par une sortie (3 ; 3') de ladite chambre de mélange vers un moyen d'évacuation ;
- soumettre le matériau à un filtrage puis à un dégazage et à une extrusion en fil ;
- soumettre le matériau à un procédé de granulation.
